# EUROPEAN PATENT SPECIFICATION

(11) **EP 0 859 205 B1**
(45) Date of publication and mention of the grant of the patent: **19.07.2000**
(21) Application number: 98102536.4
(22) Date of filing: 13.02.1998
(51) Int. Cl.: F25C 1/08

(54) **Ice making machine**
Eisherstellungsvorrichtung
Dispositif pour la fabrication de glace

(30) Priority: 13.02.1997 JP 4728797
(43) Date of publication of application: 19.08.1998
(73) Proprietor: HOSHIZAKI DENKI KABUSHIKI KAISHA, Toyoake, Aichi (JP)
(72) Inventor: Furukawa, Yoshio, Sakae-cho, Toyoake, Aichi (JP); Tojima, Wakao, Nagoya, Aichi (JP)
(74) Representative: Prüfer, Lutz H., Dipl.-Phys.

(56) References cited:
- EP-A- 0 672 472
- EP-A- 0 736 738
- US-A- 2 986 020
- US-A- 4 199 956
- US-A- 4 877 083

## Description

### BACKGROUND OF THE INVENTION

### Field of the Invention

The present invention relates to an ice making machine as defined in the preamble of claim 1, 2, or 3. Such a machine is known, for example from EP 0 736 738 A.

### Description of the Related Art

A simplified ice making machine has been known as an ice making machine which continuously produces a number of ice lumps, in which ice making water is contained in a water container dish at a predetermined level, and ice making projections suspending and protruding from the underside of an ice making substrate which is provided with an evaporation tube on its surface are immersed in the ice making water, thereby causing inversed dome-like ice lumps to be formed around said ice making projections. In such an ice making machine which however, was not made available to the public before the priority date of the present application, the applicants of the present application have conceived the idea that the protruding portions of the ice making projections are inserted into the attaching holes drilled in the ice making substrate and both members are pressed to be deformed so that said ice making substrate and ice making projections are joined each other. Thereafter, fusion plating is made among joining portions of said both members to strengthen strength thereof.

In the abovementioned ice making machine, since the ice making substrate and ice making projections are attached to each other by press deformation after the ice making projections are inserted into their attaching holes of the ice making substrate, the inner diameter of the attaching holes is designed to be slightly larger than the outer diameter of the ice making projections, whereby a slight clearance remains between them. When a slight clearance produced between the attaching holes and projections in the abovementioned plating process, it is very difficult for a plating material to enter into said clearance so that slight pin holes may often be produced at the joining portions. And when the joining portions where such pin holes exist repeatedly receive heat shock (thermal impact) during ice making cycle or ice removing cycle, there is such a problem where cracks may be produced at the plated portions. In addition to that, ice making water contained on the ice making substrate invades the clearance between the protruding portion of the ice making projections and attaching holes of the ice making substrate via said cracks of the plated portions, and the clearance between the protruding portions and attaching holes is widened with passing time due to volumetric expansion, etc. resulting from freezing of the ice making water. Therefore, it is pointed out that there is a possible misgiving for said ice making projections to be dropped from the ice making substrate. Furthermore, since the evaporation tube and ice making projections are connected to each other via said ice making substrate, it takes much time to transmit freezing air or ice removing heat, which are supplied through the abovementioned evaporation tube, to the ice making projections. Accordingly, in line therewith, an unfavorable defect by which the ice making cycle and/or ice removing cycle may be lengthened is pointed out.

In various kinds of ice making machines, which produce dice-like ice cubes, plate-like ice lumps, or flake-like ice pieces, in addition to the abovementioned simplified ice making machine, some types of an ice making construction are proposed in which an ice making unit at which ice lumps are produced is formed by joining a plurality of members to each other. For example, in a so-called closed cell type ice making machine constructed so that a number of cubic ice making subchambers downwardly sectioned in an ice making chamber are openably closed by a water container dish from the underside of the subchambers, and ice making water are jet and supplied from said water container dish into the respective subchambers, thereby ice cubes are gradually formed in the corresponding subchambers, the abovementioned subchambers are constructed by joining a number of partition plates to each other, which are arrayed in both the longitudinal and cross directions.

Although a number of partition plates are joined to each other by brazing the clearance among these partition plates is very slight, and a brazing material is hardly invaded therebetween. Therefore, as in the simplified ice making machine described above, pin holes, etc. may be produced at the joining portions. In such an ice making machine, cracks may occur with passing time at the joining portions, whereby there is a misgiving that the partition plates are dropped or are deformed. Furthermore, another problem occurs, by which heat exchange is not efficiently carried out between the partition plates and the evaporation tube so that the ice making cycle or ice removal cycle may be lengthened.

From US 4,199,956 an ice making machine is known, where a plurality of members of the ice-making unit are joined to each other by a brazing process.

### SUMMARY OF THE INVENTION

In view of the above-mentioned conventional drawbacks or problems described above, which are inherent to the prior arts, the present invention was developed to preferably solve them, and is therefore an object of the invention to provide an ice making construction of an ice making machine wherein high durability can be obtained against thermal impact in making ice lumps or moving ice lumps, in addition wherein ice making cycle or ice removal cycle can be shortened.

This object is solved by an ice making machine with the features of claims 1, 2, or 3.

A preferred development of the invention is given in dependent claim 4.

### BRIEF DESCRIPTION OF THE DRAWINGS

FIG.1 is a brief longitudinally sectional view of ice making machine according to a preferred embodiment of the invention,
FIG.2 is a brief perspective view showing a state where a part of an ice making unit of the ice making machine according to the embodiment is disassembled,
FIG.3 is a cross-sectional view showing major parts of the ice making unit illustrated in FIG.2,
FIG.4 is an explanatory view showing the ice making unit when ice making cycle is completed,
FIG.5 is an explanatory view showing an ice making substrate and ice making projections before applying a vacuum brazing thereto,
FIG.6 is an explanatory view showing the ice making substrate and ice making projections to which a vacuum brazing is applied, and
FIG.7 is an explanatory view showing the ice making substrate and ice making projections to which a vacuum brazing is applied.

### DETAILED DESCRIPTION OF THE PREFERRED EMBODIMENTS

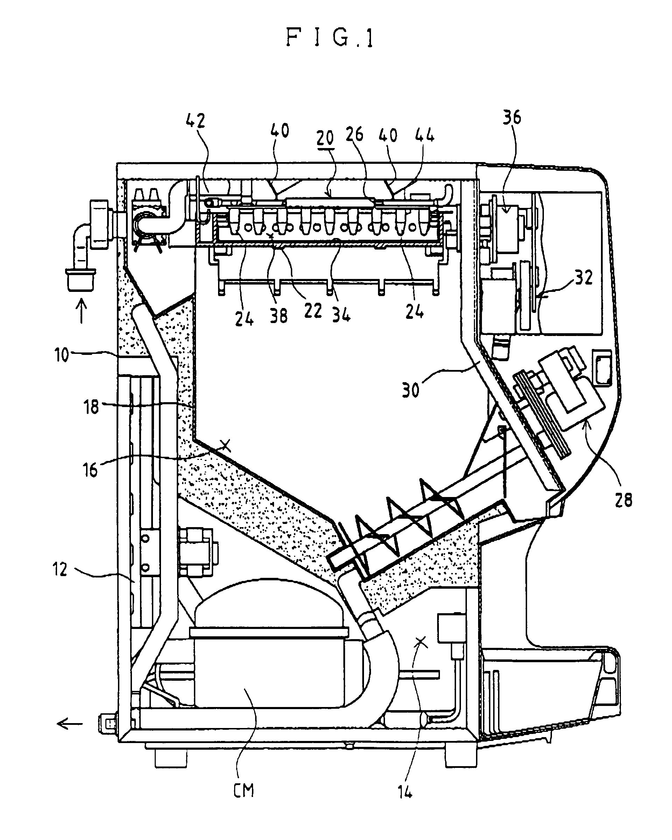

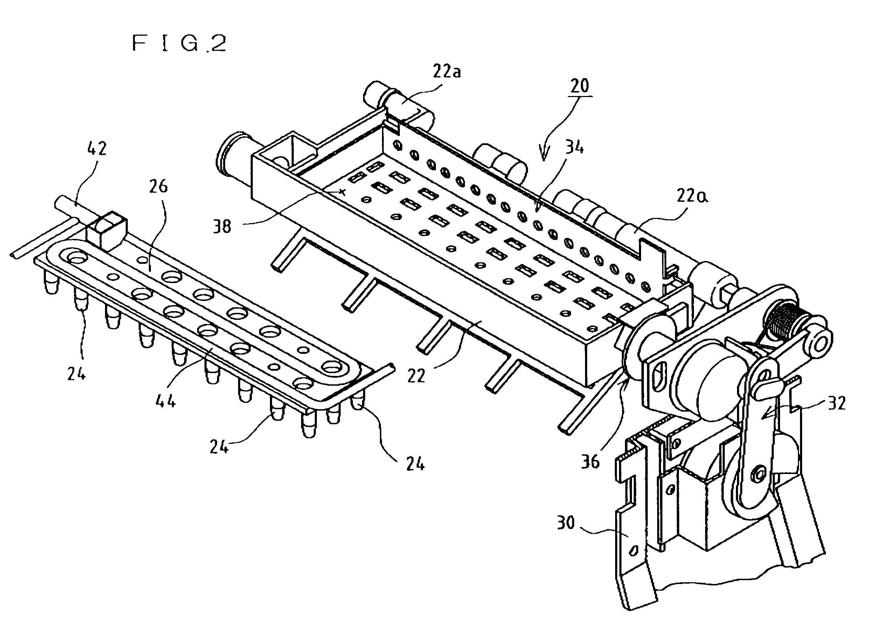

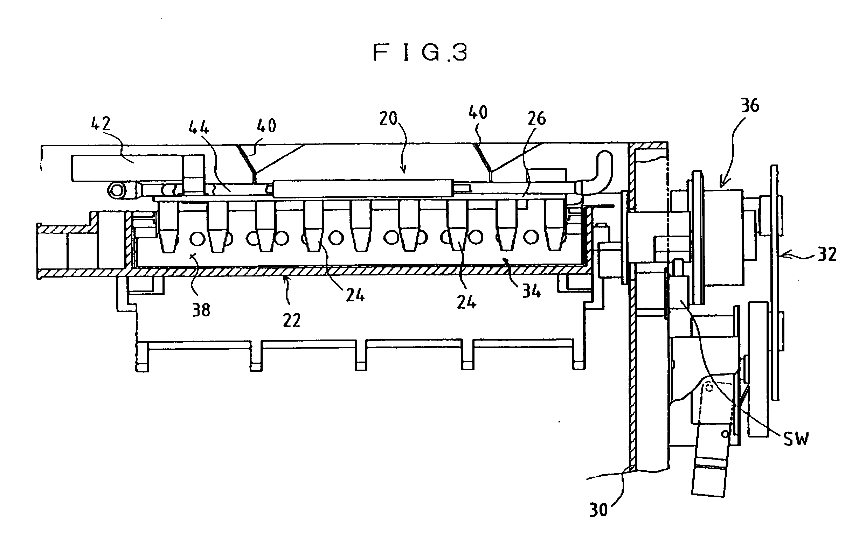

A description is given of preferred embodiments of an ice making construction of an ice making machine according to the invention, with reference to the accompanying drawings. FIG.1 is a sectional view briefly showing ice making machine according to an embodiment of the invention, the interior of a casing 10 which constitutes a body of the ice making machine is basically composed of a machinery chamber 14 in which freezing related equipment such as a compressor CM, a condenser 12, etc. are housed, a box-like ice storage chamber 18 which is located upward of the machinery chamber 14, surrounded by heat-resisting material, having an ice storage chamber 16 sectioned therein and an ice making unit 20 which is disposed internally upwards of the ice storage chamber 18. As described later with reference to FIG.2 and FIG.3, the ice making unit 20 is provided with a water container dish 22 for containing ice making water at a predetermined level and an ice making substrate 26 having a number of ice making projections 24 suspending and protruding therefrom as ice making members immersed in the ice making water, wherein said water container dish 22 is caused to be inclined to a predetermined degree of angle when the operation of the ice making machine is changed to an ice removal operation and is designed wherein ice lumps formed around the ice making projections 24 are discharged into the abovementioned ice storage chamber 16. Furthermore, the ice storage chamber 18 is provided with an ice lump discharge unit 28, by which ice lumps 27 accommodated in the ice storage chamber 16 are discharged outside.

A cover body 30 is detachably disposed at the front side of said ice storage chamber 18, and as shown in FIG.1, a tilting mechanism 32 of the water container dish 22 in the ice making unit 20, a rocking mechanism 36 for a rocking plate 34 and an ice lump discharge unit 28 are disposed together at the front side of the cover body 30, wherein the cover body 30 in which the respective mechanisms 32, 34 and the ice lump discharge unit 28 are disposed is constructed as a single unit, and the same is detachably mounted to the ice storage chamber 18.

The water container dish 22 which constitutes said ice making unit 20 is. as shown in FIG.2, formed to be a box-like body which opens upward, and ice making water can be contained in the ice making chamber 38 internally sectioned in the water container dish 22 at a determined level. An axial supporting portion 22a is integrally formed at one said of the water container dish 22, and the axial supporting portion 22a is pivotally supported by a plurality of brackets 40 disposed at the upper part of said ice storage chamber 18 (See FIG.3). Furthermore, the axial supporting portion 22a is coupled to the tilting mechanism 32 disposed at said cover body 30 so that the water container dish 22 can be tilted diagonally downward and upward centering around the axial supporting portion 22a by the corresponding mechanism 32. Still furthermore, a predetermined volume of ice making water is supplied to the ice making chamber 38 through a water supply tube 42 detachably disposed at the ice making substrate 26.

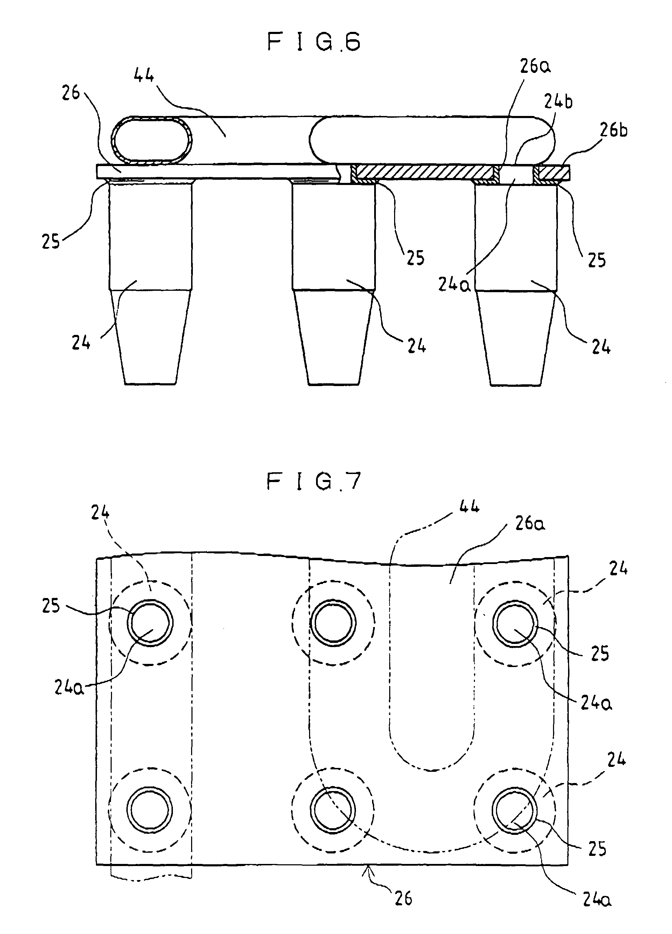

The ice making substrate 26 is horizontally disposed internally upward of said ice storage chamber 18 via the abovementioned plurality of brackets 40, and an evaporation tube 44 coming out of the freezing system housed in the mechanism chamber 14 is meanderingly disposed on the upper surface of the ice making substrate 26. Furthermore, as shown in FIG.7, a number of attaching holes 26a are drilled on the ice making substrate 26 at a predetermined interval in both longitudinal and cross directions at a pattern corresponding to the disposed position of said evaporation tube 44, and said ice making projections 24 are mounted on the underside of the ice making substrate 26 via the respective attaching holes 26a to suspend and protrude therefrom. The ice making projections 24 are shaped as a cylindrical member, the tip end of which is formed to be slightly tapered while at the other end of which is formed to be a cylindrical insertion portion 24a, a diameter thereof is designed to be insertable into the attaching hole 26a of the ice making substrate 26. Namely, the cylindrical insertion portion 24a is integrally formed to the ice making projection 24 with almost the same thickness as that of the ice making substrate 26. Still furthermore, it is recommended that the open end of the insertion portions 24a is circumferentially rounded.

As shown in FIG.5, when attaching the ice making projections 24 to the abovementioned ice making substrate 26, the insertion portion 24a of the ice making projections 24 is downwardly inserted into the attaching hole 26a of the ice making substrate 26, and after that vacuum brazing is carried out with a ring-like brazing material 25a intervened between the ice making substrate 26 and the ice making projections 24. Thereby, the ring-like brazing material 25a is melted and flows between the ice making substrate 26 and the ice making projections 24 without any clearance under a vacuum state (that is, the melted braging material 25a flows into the insertion portions 24a of the attaching hole 26a, the underside of the substrate 26 and the upperside of the projections 24). Thereby as shown in FIG.6, both the ice making substrate 26 and the ice making projections 24 are closely joined to each other by a brazing material 25. Furthermore, the open end face 24b at the insertion portion 24a of the ice making projections 24, which is inserted into the attaching hole 26a of the ice making substrate 26, is designed to be flush with the upper surface 26b of the ice making substrate 26 as shown in FIG.5, so that the ice making substrate 26 and insertion portions 24a are brought into close contact with said evaporation tube 44.

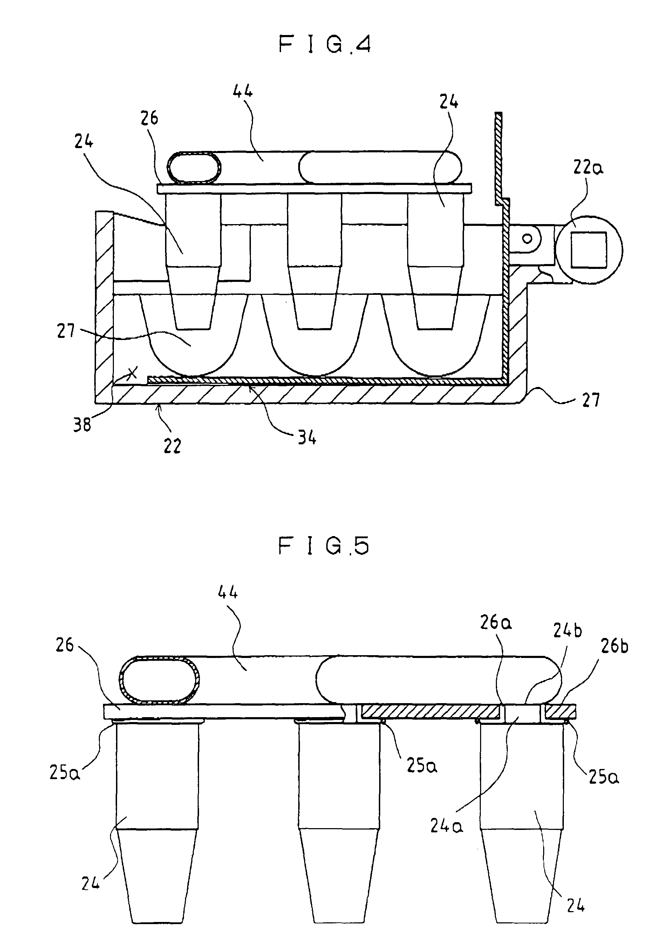

A number of ice making projections 24 suspending and protruding from the underside of said ice making substrate 26 are designed to be immersed in ice making water contained in the water container dish 22 when an ice making operation is carried out. Under the operation of the freezing system, heat exchange is performed between the projections 24 and refrigerant in the evaporation tube 44, wherein since the ice making projections 24 are cooled and held to be less than 0 °C, ice lumps 27 are gradually formed around the ice making projections 24 as shown in FIG.4.

Inside the ice making chamber 38 in the water container dish 22 being rockably disposed the rocking plate 34, which is constructed to be driven to rock vertically by the rocking mechanism 36 disposed in the cover body 30. This rocking plate 34 repeatedly rocks vertically inside the ice making chamber 38 during an ice making operation in order to move ice making water incessantly, whereby transparent ice lumps 27 are formed. Furthermore, when ice lumps 27 are formed around the ice making projections 24 in line with the ice making operations and the rocking plate 34 is brought into contact with the corresponding ice lumps 27, the rocking plate 34 turns on a switch SW for detecting ice making completion which is provided at the rocking mechanism 36, whereby the rocking plate 34 complete ice making operation of the ice making unit 20.

### (Actions of preferred embodiment)

Next, a description is given as to actions of an ice making construction of the preferred embodiment. Refrigerant is circulated within the freezing system and the evaporation tube 44 by a compressor CM when a power source turned on and the ice making projections 24 protruding from the ice making substrate 26 is commenced to be cooled by the heat exchange action thereof. Since the ice making projections 24 are immersed in ice making water, freezing is commenced around the projections 24, thereby gradually forming inversed dome-like ice lumps (See FIG.4). At this time, since the upper side 24b of the ice making projections 24 is flush with the upper side 26b of the ice making substrate 26, and the evaporation tube 44a is in close contact with the ice making substrate 26 and ice making projection 24 (See FIG.5), as well as the ice making substrate 26 and ice making projections 24 are closely joined to each other via a brazing material 25, the heat exchange action between the evaporation tube 44 and the ice making projections 24 is efficiently carried out, whereby the freezing can be completed in a short time. Furthermore, since the heat transmission conditions between the ice making substrate 26 and the ice making projections 24 become to be same, it is possible to carry out stabilized and uniform freezing. During an ice making operation, the abovementioned rocking mechanism 36 repeatedly rocks the rocking plate 34 in ice making water contained in the ice making chamber 38, thereby causing the corresponding ice making water to move at all times.

When the inversed dome-like ice lumps 27 are formed around the ice making projections 24, the ice making completion detecting switch SW is turned on via the rocking plate 34, and an ice making completion in the ice making unit 20 is detected. Thereby, said rocking mechanism 36 comes to a stop, and said tilting mechanism 32 simultaneously starts to cause the water container dish 22 and rocking plate 34 to tilt diagonally downward. And the tilting mechanism 32 stops the water container dish 22 with a predetermined tilting posture, and hot gas is supplied to the evaporation tube 44 instead of the refrigerant by changing the valve provided in said freezing system. Therefore, the ice making projections 24 are quickly heated via the evaporation tube 44. Resultantly, the bonding between the ice making projections 24 and ice lumps 27 is released so that the ice lumps 27 are dropped by their self-weight into the ice storage chamber 16 and are stored. Furthermore, in an ice removing operation the heat exchange action between the evaporation tube 44 and the ice making projections 24 can be efficiently performed, and ice removal can be completed in a short time.

As described above, as the ice making operation and ice removal operation are repeated, the thermal impact resulting therefrom is also repeatedly given to the joining portions between the ice making substrate 26 and ice making projections 24. In this case, since the ice making substrate 26 and ice making projections 24 according to this embodiment are closely and integrally joined with each other (without any pin hole) by a brazing material 25, possible cracks by thermal impact are effectively avoided. Therefore, it is possible to prevent the ice making projections 24 from dropping out of the ice making substrate 26. Furthermore, since the heat exchange action between the evaporation tube 44 and ice making projections 24 can be efficiently carried out, the ice making and ice removal cycles can be shortened to improve the daily ice lump production capacity. Still furthermore, it is possible to attach a number of ice making projections 24 to the ice making substrate 26 at a time by a vacuum brazing process under the same conditions so that steps of production and furthermore the production cost can be decreased.

In addition, in the illustrated embodiment, a description was made by raising an example of an ice making unit in which the ice making substrate and ice making projections are joined to each other, the invention is not limited to the construction, the invention may be applicable to various kinds of ice making machines in which an ice making unit is constructed by joining a plurality of members to each other. For example, in a so-called closed cell type ice making machine, by joining a number of partition plates, which constitute ice making subchambers, to each other by a vacuum brazing process, it is possible to prevent cracks from occurring and to achieve an efficient ice making cycle and ice removal cycle. Still furthermore, such a construction can be employed, where the evaporation tube may be disposed on the underside of the ice making substrate instead of the above construction in which the same is disposed on the upper surface of the substrate.

## Claims

1. An ice making machine having an ice making unit on which an evaporation tube (44)/connected to a freezing system comprising a compressor (CM) and a condenser (12), is closely disposed and on which ice lumps (27) having a predetermined shape are produced, said ice making unit being constructed by joining a plurality of members (24, 26) to each other, said plurality of members being constructed by a number of ice making members (24) and an ice making substrate (26), characterized in that:
said respective members (24, 26) constructing said ice making unit are closely joined to each other with a brazing material (25) flowed between two members (24, 26) by a vacuum brazing process.

2. An ice making machine having an ice making unit on which an evaporation tube (44), connected to a freezing system comprising a compressor (CM) and a condenser (12), is closely disposed and on which ice lumps (27) having a predetermined shape are produced, said ice making unit being constructed by joining a plurality of members (24, 26) to each other, characterized in that:
said plurality of members are a number of partition plates, which constitute ice making subchambers sectioned in an ice making chamber (38), and said respective members (24, 26) constructing said ice making unit are closely joined to each other with a brazing material (25) flowed between two members (24, 26) by a vacuum brazing process.

3. An ice making machine comprising an evaporation tube (44), connected to a freezing system comprising a compressor (CM) and a condenser (12), an ice making substrate (26) on which said evaporation tube (44) is disposed and a number of ice making members (24) suspended from the underside thereof, and a swingable water dish (22) usually disposed horizontally, in which said ice making members (24) are immersed in ice making water contained in an ice making chamber (38) constituted therein. said ice making water is frozen around said ice making members (24) to form ice lumps (27) having a predetermined shape, characterized in that:
an insertion portion (24a) of said ice making members (24) is respectively inserted into a number of attaching holes (26a) bored in said ice making substrate (26) and
said ice making substrate (26) and respective ice making members (24) are closely joined to each other with a brazing material (25) flowed therebetween by a vacuum brazing process.

4. An ice making machine as set forth in claim 3, wherein when said insertion portion (24a) of said ice making members (24) is inserted into a respective attaching hole (26a) of said ice making substrate (26), an open end face (24b) of said insertion portion (24a) is previously designed to be flush with the upper surface (26b) of said ice making substrate (26).

## Patentansprüche

1. Eisherstellungsmaschine mit einer Eisherstellungseinheit, auf der eine Verdampferröhre (44), die mit einem Gefriersystem mit einem Kompressor (CM) und einem Kondensator (12) verbunden ist, eng vorgesehen ist, und auf der Eisklumpen (27) mit einer vorbestimmten Form erzeugt werden, wobei die Eisherstellungseinheit durch Verbinden einer Mehrzahl von Teilen (24, 26) miteinander aufgebaut wird, die Mehrzahl von Teilen durch eine Zahl von Eisherstellungsteilen (24) und ein Eisherstellungssubstrat (26) aufgebaut ist,
dadurch gekennzeichnet,
daß die entsprechenden Teile (24, 26), die die Eisherstellungseinheit aufbauen, eng miteinander durch ein Hartlötmaterial (25) verbunden werden, das zwischen zwei Teile (24, 26) durch einen Vakuumhartlötvorgang fließen gelassen wird.

2. Eisherstellungsmaschine mit einer Eisherstellungseinheit, auf der eine Verdampferröhre (44), die mit einem Gefriersystem mit einem Kompressor (CM) und einem Kondensator (12) verbunden ist, eng vorgesehen ist, und auf der Eisklumpen (27) mit einer vorbestimmten Form erzeugt werden, wobei die Eisherstellungseinheit durch Verbinden einer Mehrzahl von Teilen (24, 26) miteinander aufgebaut wird,
dadurch gekennzeichnet,
daß die Mehrzahl von Teilen eine Zahl von Unterteilungsplatten sind, die Eisherstellungsunterkammern darstellen, die in einer Eisherstellungskammer (38) abgetrennt sind, und daß die entsprechenden Teile (24, 26), die die Eisherstellungseinheit aufbauen, eng miteinander durch ein Hartlötmaterial (25) verbunden werden, das zwischen zwei Teile (24, 26) durch einen Vakuumhartlötvorgang fließen gelassen wird.

3. Eisherstellungsmaschine mit einer Verdampferröhre, die mit einem Gefriersystem mit einem Kompressor (CM) und einem Kondensator (12) verbunden ist, einem Eisherstellungssubstrat (26), auf dem die Verdampferröhre (44) vorgesehen ist, und einer Zahl von Eisherstellungsteilen (24), die von der Unterseite davon herabhängen, und einer schwingfähigen Wasserschüssel (22), die normalerweise horizontal vorgesehen ist, in der die Eisherstellungsteile (24) in Eisherstellungswasser eingetaucht sind, das in einer Eisherstellungskammer (38) enthalten ist, die darin aufgebaut ist, wobei das Eisherstellungswasser um die Eisherstellungsteile (24) zum Bilden von Eiswürfeln mit einer vorbestimmten Form gefroren wird,
dadurch gekennzeichnet,
daß ein Einführungsabschnitt (24a) der Eisherstellungsteile (24) entsprechend in eine Zahl von Anbringungslöchern (26a) eingeführt ist, die in das Eisherstellungssubstrat (26) gebohrt sind, und
daß das Eisherstellungssubstrat (26) und entsprechende Eisherstellungsteile (24) eng miteinander durch ein Hartlötmaterial (25) verbunden werden, das dazwischen durch einen Vakuumhartlötvorgang fließen gelassen wird.

4. Eisherstellungsmaschine nach Anspruch 3,
bei der der Einführungsabschnitt (24a) der Eisherstellungsteile (24) in ein entsprechendes Anbringungsloch (26a) des Eisherstellungssubstrates (26) eingeführt wird, wobei eine obere Endfläche (24b) des Einführungsabschnittes (24a) zuvor ausgelegt ist, daß es mit der oberen Oberfläche (26b) des Eisherstellungssubstrates (26) fluchtet.

## Revendications

1. Machine de fabrication de glace comprenant un module de fabrication de glace sur lequel un tube d'évaporation (44), connecté à un système de congélation comprenant un compresseur (CM) et un condenseur (12), est étroitement disposé et sur lequel des morceaux de glace (27) ayant une forme prédéfinie sont produits, ledit module de fabrication de glace étant constitué en joignant une pluralité d'éléments (24, 26) les uns aux autres, ladite pluralité d'éléments étant constitués par un certain nombre d'éléments de fabrication de glace (24) et d'un substrat de fabrication de glace (26), caractérisée en ce que :
lesdits éléments respectifs (24, 26) constituant ledit module de fabrication de glace sont étroitement joints les uns aux autres à l'aide d'un matériau de brasage (25) coulé entre deux éléments (24, 26) suivant un procédé de brasage sous vide.

2. Machine de fabrication de glace comprenant un module de fabrication de glace sur lequel un tube d'évaporation (44), connecté à un système de congélation comprenant un compresseur (CM) et un condenseur (12), est étroitement disposé et sur lequel des morceaux de glace (27) ayant une forme prédéfinie sont produits, ledit module de fabrication de glace étant constitué en joignant une pluralité d'éléments (24, 26) les uns aux autres, caractérisée en ce que :
ladite pluralité d'éléments sont un certain nombre de plaques de séparation qui constituent des sous-chambres de fabrication de glace sectionnées dans une chambre de fabrication de glace (38), et
lesdits éléments respectifs (24, 26) constituant ledit module de fabrication de glace sont étroitement joints les uns aux autres à l'aide d'un matériau de brasage (25) coulé entre deux éléments (24, 26) suivant un procédé de brasage sous vide.

3. Machine de fabrication de glace comprenant un tube d'évaporation (44), connecté à un système de congélation comprenant un compresseur (CM) et un condenseur (12), un substrat de fabrication de glace (26) sur lequel ledit tube d'évaporation (44) est disposé et un certain nombre d'éléments de fabrication de glace (24) suspendus par dessous celui-ci, et un récipient conteneur d'eau (22) oscillant, généralement disposé horizontalement, dans laquelle lesdits éléments de fabrication de glace (24) sont immergés dans l'eau de fabrication de glace contenue dans une chambre de fabrication de glace (38) formée dans celle-ci, ladite eau de fabrication de glace est congelée autour desdits éléments de fabrication de glace (24) pour former des morceaux de glace (27) ayant une forme prédéfinie, caractérisée en ce que :
une partie d'insertion (24a) desdits éléments de fabrication de glace (24) est respectivement insérée dans un certain nombre de trous de fixation (26a) percés dans ledit substrat de fabrication de glace (26) et
lesdits substrat de fabrication de glace (26) et éléments de fabrication de glace (24) respectifs sont étroitement joints les uns aux autres à l'aide d'un matériau de brasage (25) coulé entre ceux-ci suivant un procédé de brasage sous vide.

4. Machine de fabrication de glace selon la revendication 3, dans laquelle ladite partie d'insertion (24a) desdits éléments de fabrication de glace (24) est insérée dans un trou de fixation respectif (26a) dudit substrat de fabrication de glace (26), et une face terminale ouverte (24b) de ladite partie d'insertion (24a) est préalablement conçue pour être à niveau avec la surface supérieure (26b) dudit substrat de fabrication de glace (26).
